# EUROPEAN PATENT APPLICATION

(11) **EP 4 667 286 A1**
(43) Date of publication of application: **24.12.2025**
(21) Application number: 24847658.2
(22) Date of filing: 18.04.2024
(51) Int. Cl.: B60Q 1/36, B60J 5/04, F21S 43/50, F21S 43/235, F21S 43/19, F21S 45/10, F21V 3/00, F21V 15/01, F21W 103/20

(54) **SIDE TURN SIGNAL LAMP MOUNTING ASSEMBLY, DOOR BODY OF VEHICLE, AND VEHICLE**

(30) Priority: 31.07.2023 CN 202310955582
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: WANG, Yibin, Hangzhou, Zhejiang 310051 (CN); DAI, Kaihong, Hangzhou, Zhejiang 310051 (CN)
(74) Representative: Range, Christopher William
(86) International application number: PCT/CN2024/088582
(87) International publication number: WO 2025/025692

(57) **Abstract**

Disclosed are a side turn signal lamp mounting assembly (100), a door body (200) of a vehicle, and a vehicle. The side turn signal lamp mounting assembly (100) includes: a mounting cover plate (10) and a turn signal lamp component (20), wherein the mounting cover plate (10) has a first light-transmitting area (1101); and the turn signal lamp component (20) is provided on one side of the mounting cover plate (10) and comprises a shell (21) and a light-emitting member (22), the shell (21) has a second light-transmitting area (2121) arranged to face the first light-transmitting area (1101), the light-emitting member (22) is provided in the shell (21), and light emitted by the light-emitting member (22) is adapted to be emitted through the first light-transmitting area (1101) and the second light-transmitting area (2121).

## Description

### CROSS-REFERENCE TO RELATED APPLICATION

This application is based on and claims priority to Chinese Patent Application No. 202310955582.8, filed on July 31, 2023, the entire contents of which are incorporated herein by reference.

### FIELD

The present disclosure relates to the field of vehicle technologies, and more particularly, to a side turn signal lamp mounting assembly, a door body of a vehicle, and a vehicle.

### BACKGROUND

In the related art, conventional side turn signal lamps of vehicles are mostly directly mounted on rearview mirrors, which results in multiple styling parting lines on the rearview mirrors and therefore makes the rearview mirrors susceptible to issues such as wind noise, leaving room for improvement.

### SUMMARY

The present disclosure aims to solve at least one of the technical problems in the related art. To this end, the present disclosure provides a side turn signal lamp mounting assembly, capable of reducing styling parting lines on a vehicle body and reducing wind noise.

The present disclosure further provides a door body of a vehicle.

The present disclosure further provides a vehicle.

According to an embodiment in a first aspect of the present disclosure, a side turn signal lamp mounting assembly is provided. The side turn signal lamp mounting assembly includes: a mounting cover plate having a first light-transmitting region; and a turn signal lamp component disposed at a side of the mounting cover plate and including a shell and a light-emitting member. The shell has a second light-transmitting region arranged to face the first light-transmitting region. The light-emitting member is disposed in the shell. Light emitted by the light-emitting member is adapted to be emitted through the first light-transmitting region and the second light-transmitting region.

With the side turn signal lamp mounting assembly according to the embodiment of the present disclosure, by disposing the turn signal lamp component at a side of the mounting cover plate, the mounting cover plate is enabled to cover the turn signal lamp component, which can prevent the turn signal lamp component from being exposed on a surface of the vehicle body. As a result, the turn signal lamp component can be protected, extending a service life of the turn signal lamp component, and avoiding wind noise generated due to an airflow impact on the turn signal lamp component. Since the turn signal lamp component is mounted in the mounting cover plate, connecting the mounting cover plate to the vehicle body can enable parting lines of the vehicle body to coincide as much as possible with styling feature lines, reducing additional parting lines on the vehicle body and improving aesthetics. By configuring the light-transmitting region on the mounting cover plate and the light-transmitting region on the turn signal lamp component to face each other, the light-emitting member in the turn signal lamp component can emit light to an outside of a vehicle through the light-transmitting regions. Thus, a luminous intensity of the turn signal lamp component can be increased, which facilitates a clear observation of a turn signal of the vehicle by people outside the vehicle.

According to some embodiments of the present disclosure, at least two light-emitting members are provided. Light-emitting directions of the at least two light-emitting members are different.

In some examples, the turn signal lamp component further includes a light guide member disposed in the shell. The at least two light-emitting members are located on two adjacent sides of the light guide member.

In some examples, the turn signal lamp component further includes a first circuit board and a second circuit board. A plurality of light-emitting members are provided, and the first circuit board is provided with one or more of the plurality of light-emitting members. The second circuit board is disposed at a side of the first circuit board and extends in a different direction from the first circuit board. The second circuit board is provided with the remaining one or more of the plurality of light-emitting members.

According to some embodiments of the present disclosure, the mounting cover plate includes an outer cover housing and an inner cover housing. The outer cover housing is a light-transmitting member. The inner cover housing is disposed at a side of the outer cover housing and has an avoidance opening. A part of the outer cover housing corresponding to the avoidance opening in position is formed as the first light-transmitting region.

In some examples, the outer cover housing has a light transmittance ranging from 35% to 85%.

In some examples, the mounting cover plate is adapted to be mounted at an exterior trim panel of a side portion of a vehicle body. The outer cover housing includes a first side plate and a second side plate. The first side plate protrudes beyond the exterior trim panel and extends in a length direction of the vehicle body. The second side plate is located at a side of the first side plate close to an interior of the vehicle body and connected to an end of the first side plate close to a tail of the vehicle body. The second side plate extends obliquely towards the tail of the vehicle body in a direction away from the first side plate.

In some examples, the outer cover housing and the inner cover housing are integrally injection-molded.

In some examples, the inner cover housing is integrally injection-molded from acrylic and engineering plastic.

According to some embodiments of the present disclosure, the shell includes a bottom housing and a cover cap. The cover cap is disposed to cover a side of the bottom housing close to the mounting cover plate. The cover cap cooperates with the bottom housing to form a receiving space for receiving the light-emitting members. A part of the cover cap facing the first light-transmitting region is formed as the second light-transmitting region.

In some examples, the cover cap has a light transmittance ranging from 20% to 80%.

In some examples, the side turn signal lamp mounting assembly further includes a seal disposed between the turn signal lamp component and the mounting cover plate. The turn signal lamp component and the mounting cover plate are fixedly connected to each other by a fastener. The seal is configured to implement a sealing connection between the turn signal lamp component and the mounting cover plate.

According to an embodiment in a second aspect of the present disclosure, a door body of a vehicle is provided. The door body includes: a door trim panel; and the side turn signal lamp mounting assembly according to any of the embodiments in the first aspect of the present disclosure. The mounting cover plate is disposed at the door trim panel.

In the embodiments of the present disclosure, the door body of the vehicle has the side turn signal lamp mounting assembly described above. By adopting the side turn signal lamp mounting assembly described above, the turn signal lamp component can be prevented from being exposed on a surface of the door body of the vehicle. In addition, the parting lines of the vehicle body can be enabled to coincide as much as possible with the styling feature lines, reducing the additional parting lines on the vehicle body and improving the aesthetics. Further, no turn signal lamps need to be disposed at a rearview mirror, which avoids excessive parting lines on the rearview mirror, and reduces the wind noise generated at the rearview mirror.

According to some embodiments of the present disclosure, the door trim panel has a recess recessed towards an inner side of the vehicle; and the mounting cover plate at least partially protrudes beyond the recess.

According to an embodiment in a third aspect of the present disclosure, a vehicle is provided. The vehicle includes the side turn signal lamp mounting assembly according to any of the embodiments in the first aspect of the present disclosure. By adopting the side turn signal lamp mounting assembly described above, the turn signal lamp component can be prevented from being exposed on the surface of the vehicle body. In addition, the parting lines of the vehicle body can be enabled to coincide as much as possible with the styling feature lines, reducing the additional parting lines on the vehicle body and improving the aesthetics. Further, no turn signal lamps need to be disposed at the rearview mirror, which avoids excessive parting lines on the rearview mirror, and reduces the wind noise generated at the rearview mirror.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of a side turn signal lamp mounting assembly according to some embodiments of the present disclosure, viewed from a perspective.
FIG. 2 is a schematic structural view of a side turn signal lamp mounting assembly according to some embodiments of the present disclosure, viewed from another perspective.
FIG. 3 is an exploded view of a side turn signal lamp mounting assembly according to some embodiments of the present disclosure.
FIG. 4 is an exploded view of a turn signal lamp component according to some embodiments of the present disclosure.
FIG. 5 is a schematic assembled view of a mounting cover plate and a turn signal lamp component according to some embodiments of the present disclosure.
FIG. 6 is a schematic structural view of a door body of a vehicle according to some embodiments of the present disclosure.

Reference numerals of the accompanying drawings:
side turn signal lamp mounting assembly 100, door body of the vehicle 200, door trim panel 210, recess 220,
mounting cover plate 10, outer cover housing 11, first side plate 111, second side plate 112, first light-transmitting region 1101, inner cover housing 12,
turn signal lamp component 20, shell 21, bottom housing 211, cover cap 212, second light-transmitting region 2121,
light-emitting member 22, first light-emitting member 221, second light-emitting member 222,
light guide member 23, first side surface 231, second side surface 232,
first circuit board 24, second circuit board 25,
seal 30.

### DETAILED DESCRIPTION

Embodiments of the present disclosure will be described in detail below with reference to examples thereof as illustrated in the accompanying drawings, throughout which same or similar elements, or elements having same or similar functions, are denoted by the same or similar reference numerals. The embodiments described below with reference to the drawings are illustrative only, and are intended to explain, rather than limit, the present disclosure.

In the description of the present disclosure, it should be understood that, the orientation or the position indicated by technical terms such as "center", "longitudinal", "transverse", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In addition, the features associated with "first" and "second" may explicitly or implicitly include at least one of the features. In the description of the present disclosure, "plurality" means at least two, unless otherwise specifically defined.

In the description of the present disclosure, it should be noted that, unless otherwise clearly specified and limited, terms such as "install", "connect", and "connect to" should be understood in a broad sense. For example, it may be a fixed connection or a detachable connection or connection as one piece; mechanical connection or electrical connection; direct connection or indirect connection through an intermediate; internal communication of two components. For those of ordinary skill in the art, the specific meaning of the above-mentioned terms in the present disclosure can be understood according to specific circumstances.

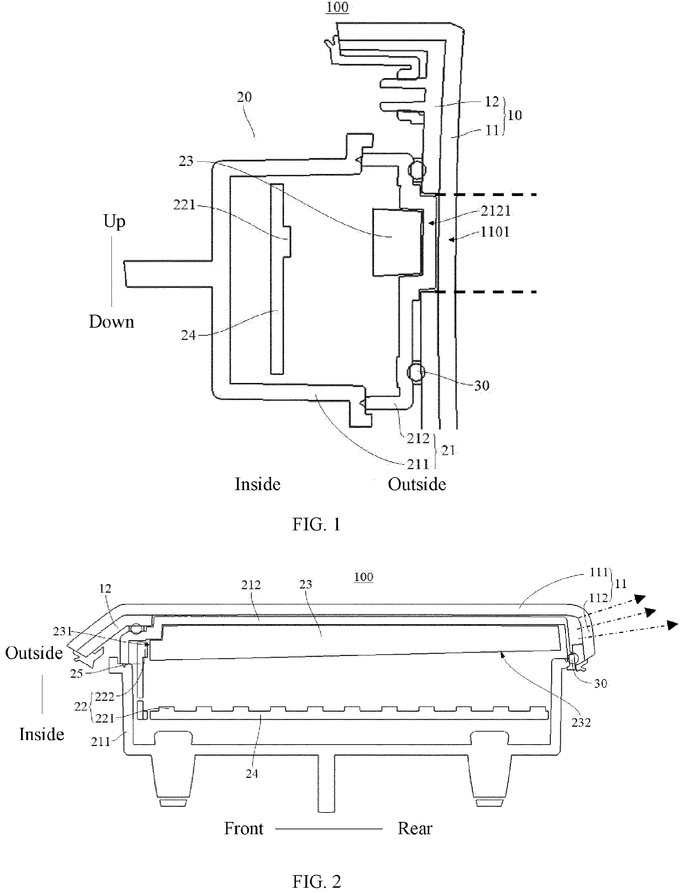

A side turn signal lamp mounting assembly 100 according to the embodiments of the present disclosure is described below with reference to FIG. 1 to FIG. 6.

As illustrated in FIG. 1 to FIG. 6, the side turn signal lamp mounting assembly 100 according to the embodiments of the present disclosure includes a mounting cover plate 10 and a turn signal lamp component 20. The mounting cover plate 10 has a first light-transmitting region 1101. The turn signal lamp component 20 is disposed at a side (an inner side as illustrated in FIG. 1) of the mounting cover plate 10, and includes a shell 21 and a light-emitting member 22. The shell 21 has a second light-transmitting region 2121 arranged to face the first light-transmitting region 1101. The light-emitting member 22 is disposed in the shell 21. Light emitted by the light-emitting member 22 can be emitted through the first light-transmitting region 1101 and the second light-transmitting region 2121. In this way, the light emitted by the light-emitting member 22 can pass through the turn signal lamp component 20 and the mounting cover plate 10. In addition, the light-emitting member 22 is covered by the mounting cover plate 10 and the shell 21, providing protection for internal components of the turn signal lamp component 20.

With the side turn signal lamp mounting assembly 100 according to the embodiments of the present disclosure, by disposing the turn signal lamp component 20 at the side of the mounting cover plate 10, the mounting cover plate 10 is enabled to cover the turn signal lamp component 20, which can prevent the turn signal lamp component 20 from being exposed on a surface of the vehicle body. As a result, the turn signal lamp component 20 can be protected, extending a service life of the turn signal lamp component 20, and avoiding wind noise generated due to an airflow impact on the turn signal lamp component 20. The turn signal lamp component 20 is mounted inside of the mounting cover plate 10, and the mounting cover plate 10 is connected to the vehicle body in such a way that the vehicle body parting lines are coincide with styling feature lines as much as possible, reducing additional parting lines on the vehicle body and improving aesthetics. The light-transmitting region on the mounting cover plate 10 is configured to face the light-transmitting region on the mounting cover plate 10, so that the light-emitting member 22 in the turn signal lamp component 20 can emit light to an outside of a vehicle through the light-transmitting regions. Thus, a luminous intensity of the turn signal lamp component 20 can be increased, which facilitates a clear observation of a turn signal of the vehicle by people outside the vehicle.

As illustrated in FIG. 2, according to some embodiments of the present disclosure, two light-emitting members 22 may be provided, and light-emitting directions of the two light-emitting members 22 are different. In this way, light emitted by the turn signal lamp component 20 to the outside of the vehicle is more uniform, and a light intensity of the light emitted by the turn signal lamp component 20 to the outside of the vehicle in various directions can be increased.

In some embodiments, the light emitted by the turn signal lamp component 20 may be uniformly directed towards a left side or a right side and a rear side of the vehicle body through the mounting cover plate 10. According to regulatory requirements, a signal having a predetermined light intensity must be visible from a predetermined angle at the rear after the side turn signal light is turned on. By adopting the above structure that emits light in different light-emitting directions, not only can the turn signal lamp component 20 be hidden, but also the regulatory requirements can be satisfied.

In some examples, a plurality of light-emitting members 22 may be provided. For example, three light-emitting members 22 may be provided. The light-emitting directions of the three light-emitting members 22 may be different, which can further improve uniformity of the light output from the turn signal lamp component 20. The light-emitting directions of the three light-emitting members 22 may be partially the same. That is, the light-emitting directions of the first two light-emitting members 22 are the same, while the light-emitting direction of the third light-emitting member 22 is different from that of the first two light-emitting members 22. This arrangement allows for a localized enhancement of the light intensity of the light emitted by the turn signal lamp component 20 to the outside of the vehicle in different directions, which is beneficial for a light emission intensity of the turn signal lamp component 20 to meet a minimum light intensity required by regulations.

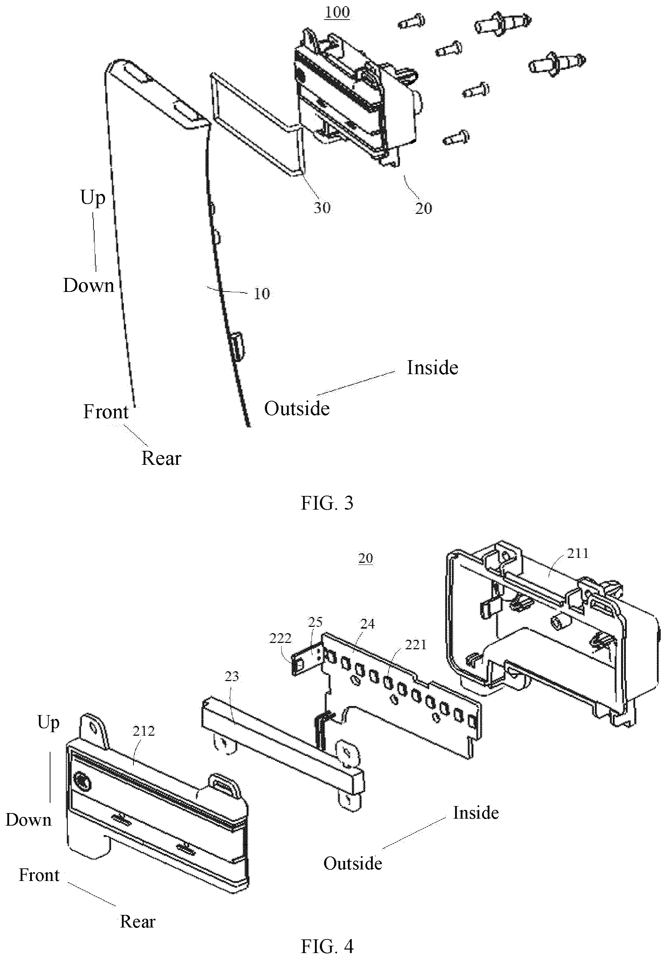

As illustrated in FIG. 1 and FIG. 2, in some examples, the turn signal lamp component 20 further includes a light guide member 23. The light guide member 23 is disposed in the shell 21. The two light-emitting members 22 may be located on two adjacent sides (a front side and the inner side as illustrated in FIG. 4) of the light guide member 23, allowing the two light-emitting members 22 to respectively emit light towards the left side or the right side, and the rear side of the vehicle body. The emitted light, after being diffused by the light guide member 23, is emitted to the outside of the vehicle, which can improve the uniformity of the light emitted outwards by the turn signal lamp component 20. In this way, people outside the vehicle can clearly observe a turning signal of the vehicle even if they are at the rear side of the vehicle, enhancing the safety of the vehicle owner and people outside the vehicle.

In some embodiments, a plurality of light-emitting members 22 may be provided. For example, three light-emitting members 22 may be provided. The first two light-emitting members 22 may be located on one side of the light guide member 23, while the third light-emitting member 22 may be located on another side of the light guide member 23, with the one side of the light guide member 23 adjacent to the other side of the light guide member 23. This arrangement allows for the localized enhancement of the light intensity of the light emitted by the turn signal lamp component 20 to the outside of the vehicle in different directions. Further, by adjusting the number of light-emitting members 22 located on different sides of the light guide member 23, control over the light intensity of the light emitted by the turn signal lamp component 20 in different directions can be achieved. In this way, while meeting the minimum light intensity required by the regulations, it can meet the needs of various user groups and is conducive to adapting to a variety of vehicle models.

In some embodiments, for the side turn signal lamp mounting assembly 100 located at the left side of the vehicle body, the turn signal lamp component 20 located in the side turn signal lamp mounting assembly 100 can emit light towards the left side and the rear side of the vehicle body. For the side turn signal lamp mounting assembly 100 located at the right side of the vehicle body, the turn signal lamp component 20 located in the side turn signal lamp mounting assembly 100 can emit light towards the right side and the rear side of the vehicle body.

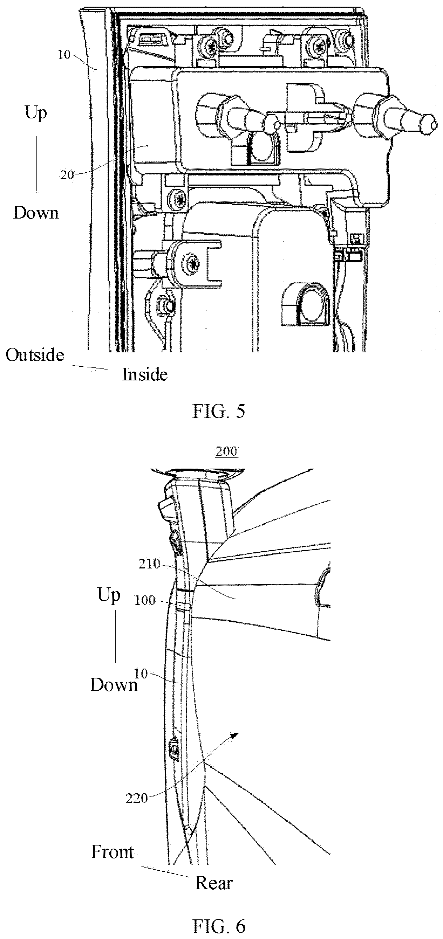

As illustrated in FIG. 2, in some examples, the light guide member 23 has a first side surface 231 and a second side surface 232 that are arranged adjacent to each other. The light-emitting member 22 includes a first light-emitting member 221 and a second light-emitting member 222. The first light-emitting member 221 is located on one side (the inner side as illustrated in FIG. 2) of the light guide member 23 and is arranged to face the second side surface 232. The second light-emitting member 222 is located on one side (the front side as illustrated in FIG. 2) of the light guide member 23 and is arranged to face the first side surface 231. In this way, the light emitted by the light-emitting member 22 can be sufficiently emitted outwards through the light guide member 23, thus a light diffusion effect of the light guide member 23 is improved. An angle between the first side surface 231 and the second side surface 232 is smaller than or equal to 90°. On one hand, the light from the first light-emitting member 221 and the second light-emitting member 222 can be emitted towards two different directions, and the light from multiple locations is diffused by the light guide member 23, improving the uniformity of the light emitted by the side turn signal lamp mounting assembly 100. Meanwhile, the light emitted by the second light-emitting member 222 towards the rear side of the vehicle body can be tilted to an outer side of the vehicle body or can be parallel to an extension direction of the vehicle body (a front-rear direction as illustrated in FIG. 6). In this way, the vehicle body is prevented from blocking the light, so as to help people outside the vehicle to clearly observe the turning signal of the vehicle from the left side, the right side, and the rear side of the vehicle, effectively ensuring traffic safety. On the other hand, a mounting space within the turn signal lamp component 20 can be saved, facilitating mounting.

In some examples, the light guide member 23 may be provided with a plurality of protrusions at an outer periphery of the light guide member 23. The plurality of protrusions are arranged to protrude from the outer periphery of the light guide member 23. Each of the plurality of protrusions can be welded to the shell 21 through ultrasonic welding to fixedly connect the light guide member 23 to the shell 21. In this way, a fixation effect of the light guide member 23 can be improved and damage to the light guide member 23 during a welding operation is reduced, enhancing stability of light guidance by the light guide member 23.

In some embodiments, the light guide member 23 may include a snap at the outer periphery of the light guide member 23, and an inner side surface of the shell 21 may have a groove. The snap may be engaged with the groove to connect the light guide member 23 to the shell 21. Alternatively, the inner side surface of the shell 21 may have a concave recessed outwards, and the light guide member 23 may be fitted with the concave and in interference fit with a side wall of the concave to connect the light guide member 23 to the shell 21, facilitating an operation.

As illustrated in FIG. 2 and FIG. 4, in some examples, the turn signal lamp component 20 further includes a first circuit board 24 and a second circuit board 25. The first circuit board 24 is provided with a plurality of first light-emitting members 221. The second circuit board 25 is disposed at a side (the front side as illustrated in FIG. 2) of the first circuit board 24. An extension direction (an inside-outside direction as illustrated in FIG. 2) of the second circuit board 25 differs from that (the front-rear direction as illustrated in FIG. 2) of the first circuit board 24. The second circuit board 25 is provided with a plurality of second light-emitting members 222. This arrangement facilitates the first light-emitting member 221 and the second light-emitting member 222 to emit light in different directions. The first light-emitting member 221 is configured to emit light towards the left side or the right side of the vehicle body. The second light-emitting member 222 is configured to emit light towards the rear side of the vehicle body. On one hand, the uniformity of the light emitted by the turn signal lamp component 20 can be improved. On the other hand, the minimum light intensity required by the regulations can be met. That is, after the turn signal lamp component 20 emits light, the light intensity signal observed by a user outside the vehicle within a viewing angle ranging from 5° to 60° from the rear of the vehicle body is at least 0.6 cd.

In some examples, the first circuit board 24 and the second circuit board 25 may be integrally formed. By bending a single piece of circuit board, the two circuit boards can be inclined relative to each other, thus saving manufacturing costs.

As illustrated in FIG. 4, in some examples, the first circuit board 24 and the second circuit board 25 may be perpendicular to each other. That is, each of multiple first light-emitting members 221 at the first circuit board 24 is configured to emit light towards the left side or the right side of the vehicle, and each of multiple second light-emitting members 222 at the second circuit board 25 is configured to emit light towards the rear side of the vehicle. The first circuit board 24 and the second circuit board 25 may be separately mounted at two adjacent inner wall surfaces of the shell 21. On the one hand, the mounting space within the turn signal lamp component 20 can be saved, which is conducive to miniaturization of the turn signal lamp component 20, and facilitates hiding of the turn signal lamp component 20 inside the vehicle body, improving aesthetics of an appearance of the vehicle. On the other hand, the light diffusion effect can be enhanced, enabling the turn signal lamp component 20 to emit light uniformly to the outside of the vehicle, while increasing the light intensity of the light emitted by the turn signal lamp component 20 towards the rear side of the vehicle.

In some examples, the circuit board includes a snap, and the shell 21 has a groove within the shell 21. A position of the snap corresponds to that of the groove, allowing the circuit board to be snapped with the shell 21 for ease of operation.

As illustrated in FIG. 1 and FIG. 2, according to some embodiments of the present disclosure, the mounting cover plate 10 includes an outer cover housing 11 and an inner cover housing 12. The outer cover housing 11 is a light-transmitting member. The inner cover housing 12 is disposed at a side (the inner side as illustrated in FIG. 1) of the outer cover housing 11 and has an avoidance opening to facilitate emission of the light. A part of the outer cover housing 11 corresponding to the avoidance opening in position may be formed as the first light-transmitting region 1101. Thus, the light emission intensity of the side turn signal lamp mounting assembly 100 can be increased without forming a light-transmitting opening at an exterior of the mounting cover plate 10, which facilitates the clear observation of the turn signal of the vehicle by people outside the vehicle. In this way, parting lines on an exterior of the side turn signal lamp mounting assembly 100 can be reduced, which improves structural aesthetics and a product grade.

In some embodiments, a part of the turn signal lamp component 20 may be mounted at the avoidance opening. Since the avoidance opening can serve to avoid interference with the shell 21, a part of the shell 21 can be inserted into the avoidance opening, and an outer wall surface of the shell 21 can abut with an inner wall surface of the outer cover housing 11, improving stability of mounting of the turn signal lamp component 20.

In some examples, the outer cover housing 11 may be made of a transparent acrylic (Polymethyl Methacrylate, PMMA) material, which can ensure a suitable light transmittance of the outer cover housing 11. If the light transmittance of the outer cover housing 11 is too low, the observation by people outside the vehicle is affected. If the light transmittance of the outer cover housing 11 is too high, a light emission boundary of the outer cover housing 11 becomes blurred, affecting a light emission quality of the outer cover housing 11. Therefore, the light transmittance of the outer cover housing 11 can be limited to range from 35% to 85%. The light transmittance of the outer cover housing 11 may be 35%, 85%, or any value between 35% and 85%, such as 48%, 58%, and 68%, which can enhance the intensity of the light emitted by the turn signal lamp component 20 to the outside of the vehicle to facilitate the observation by people outside the vehicle. In addition, a clear light boundary is realized, which can improve the light emission quality of the outer cover housing 11, reducing a likelihood of safety incidents.

In some examples, the inner cover housing 12 may be made of a black material formed by integrally injection-molding acrylic (PMMA) and engineering plastic (Acrylonitrile Styrene Acrylate, ASA), and the black material provides high light reflectivity. Further, the outer cover housing 11 may be made of a gray-black material. Thus, the inner cover housing 12 and the outer cover housing 11 cooperate with each other to present a black effect of high light reflectivity at an edge of a light-emitting region of the turn signal lamp component 20, enhancing a hiding effect for the turn signal lamp component 20. That is, in the event that the light-emitting member is turned off, the turn signal lamp component 20 becomes visually indistinguishable from the black mounting cover plate 10, improving an overall visual impression of the black mounting cover plate 10. Moreover, people outside the vehicle can clearly see the light when the light-emitting member is turned on, highlighting a technological feel of the product and improving the aesthetics of the product.

As illustrated in FIG. 2 and FIG. 6, in some examples, the mounting cover plate 10 may be mounted at an exterior trim panel of a side portion of the vehicle body. The outer cover housing 11 includes a first side plate 111 and a second side plate 112. The first side plate 111 protrudes beyond the exterior trim panel and extends in a length direction (the front-rear direction as illustrated in FIG. 6) of the vehicle body. The second side plate 112 is located at a side (the inner side as illustrated in FIG. 2) of the first side plate 111 that is close to an interior of the vehicle body. The second side plate 112 is connected to an end (a rear end as illustrated in FIG. 6) of the first side plate 111 that is close to a tail of the vehicle body. The second side plate 112 extends obliquely towards the tail of the vehicle body in a direction away from the first side plate 111. As illustrated in FIG. 2, the second side plate 112 extends obliquely rearwards from outside to inside, which causes a part of a light-emitting surface of the turn signal lamp component 20 to face toward the rear side of the vehicle, facilitating the observation of the turn signal of the vehicle by people located at the rear side of the vehicle.

As illustrated in FIG. 6, in some embodiments, the exterior trim panel may be a door trim panel 210 located at an outer side of a vehicle door. When the user opens the vehicle door, the turn signal lamp component 20 can be driven to move along with the vehicle door, improving the product grade. The exterior trim panel may also be a side fender located at a front part of the vehicle, which can improve product reliability.

As illustrated in FIG. 2, in some examples, the first light-transmitting region 1101 has a first light-transmitting side and a second light-transmitting side. The first light-transmitting side faces the outer side (an outer side as illustrated in FIG. 4) of the vehicle body, while the second light-transmitting side faces the rear side (the rear side as illustrated in FIG. 6) of the vehicle body. In this way, an angular range of illumination of the turn signal lamp component 20 can be expanded to facilitate the observation by people outside the vehicle, ensuring traffic safety.

In some examples, the inner cover housing 12 and the outer cover housing 11 may be integrally injection-molded, which facilitates processing. Furthermore, a shape of the inner cover housing 12 may be substantially similar to that of the outer cover housing 11, which facilitates integral injection molding and ensures satisfactory light transmission effect.

As illustrated in FIG. 2, according to some embodiments of the present disclosure, the shell 21 includes a bottom housing 211 and a cover cap 212. The cover cap 212 is disposed to cover a side (the outer side as illustrated in FIG. 4) of the bottom housing 211 that is close to the mounting cover plate 10. The cover cap 212 cooperates with the bottom housing 211 to form a receiving space for receiving the light-emitting member 22. A part of the cover cap 212 facing the first light-transmitting region 1101 may be formed as the second light-transmitting region 2121. Thus, the light emitted by the light-emitting member 22 can be emitted through the light-transmitting region, which facilitates the observation by people outside the vehicle, ensuring traffic safety.

In some examples, the cover cap 212 may be made of an acrylic (PMMA) diffusion material, which can enhance the light diffusion effect. If a light transmittance of the cover cap 212 is too low, the light emission intensity of the turn signal lamp component 20 is affected. If the light transmittance of the cover cap 212 is too high, the light emission boundary of the outer cover housing 11 is likely to become blurred, affecting the observation by people outside the vehicle. Therefore, the light transmittance of the cover cap 212 can be limited to range from 20% to 80%. The light transmittance of the cover cap 212 may be 20%, 80%, or any one value from a range of 20% to 80%, such as 30%, 45%, and 60%, which can enhance the light diffusion effect of the cover cap 212, making the light emission of the turn signal lamp component 20 more uniform. In addition, the light emission intensity of the turn signal lamp component 20 can be increased and a clear light emission boundary can be ensured to facilitate the observation by people outside the vehicle.

In some embodiments, the cover cap 212 may be made of a gray-black light diffusion material. That is, inorganic particles are added to a diffusion plate substrate. The inorganic particles can act as scattering particles, which causes the light to refract and reflect after passing through the cover cap 212, achieving uniform light emission from the turn signal lamp component 20 and improving light uniformity. In addition, hiding of an internal structure of the turn signal lamp component 20 can be facilitated, which can improve the aesthetics of an appearance of the turn signal lamp component 20 and the product grade.

In some examples, the cover cap 212 and the bottom housing 211 may be welded using an ultrasonic welding process, which can reinforce a connection between the cover cap 212 and the bottom housing 211 and is convenient to operate.

As illustrated in FIG. 3, in some examples, the side turn signal lamp mounting assembly 100 further includes a seal 30. The seal 30 is disposed between the turn signal lamp component 20 and the mounting cover plate 10. The turn signal lamp component 20 and the mounting cover plate 10 are fixedly connected to each other by a fastener. The seal 30 is configured to implement a sealing connection between the turn signal lamp component 20 and the mounting cover plate 10, which can prevent rainwater, dust, or other contaminants from entering a space between the turn signal lamp component 20 and the mounting cover plate 10. In this way, the light emission intensity of the turn signal lamp component 20 can be ensured, and the turn signal lamp component 20 can be prevented from being corroded and damaged, so as to extend the service life of the product. The fastener may be a screw, a bolt, etc.

In some embodiments, the bolt may be a stud, which can reinforce a connection between the turn signal lamp component 20 and the mounting cover plate 10 and is convenient to operate.

In some examples, the seal 30 may be a rubber or silicone sealing ring, and a surface thereof has adhesion capability. While ensuring sealing effectiveness, the seal is configured to provide a predetermined degree of adhesion to the turn signal lamp component 20, reinforcing the connection between the turn signal lamp component 20 and the mounting cover plate 10. The seal 30 may also be a sealant. In this way, by coating or similar methods, the turn signal lamp component 20 and the mounting cover plate 10 can be connected, further improving the stability of the connection between the turn signal lamp component 20 and the mounting cover plate 10. Further, the method of applying the sealant is convenient and easy to implement.

As illustrated in FIG. 3 and FIG. 5, in some embodiments, a mounting process of the turn signal lamp component 20 is as follows. First, a circuit board with the light-emitting member mounted is fitted onto the bottom housing 211. Then, the light guide member 23 is mounted inside the cover cap 212 using ultrasonic welding, and the cover cap 212 can be fixedly connected to the bottom housing 211 using ultrasonic welding, thus completing assembly of the turn signal lamp component 20. The turn signal lamp component 20 can be fixed to an inner side of the mounting cover plate 10 by the fastener, and the seal 30 is sandwiched between the turn signal lamp component 20 and the mounting cover plate 10, thus completing the mounting of the turn signal lamp component 20.

According to an embodiment of the present disclosure, the door body 200 of the vehicle includes the door trim panel 210 and the side turn signal lamp mounting assembly 100. The mounting cover plate 10 is disposed at the door trim panel 210, allowing the turn signal lamp component 20 to be mounted at the door body 200 of the vehicle.

With the door body 200 according to the embodiment of the present disclosure, by adopting the side turn signal lamp mounting assembly 100 described above, the turn signal lamp component 20 can be prevented from being exposed on a surface of the door body 200 of the vehicle. In addition, the parting lines of the vehicle body can be enabled to coincide as much as possible with the styling feature lines, reducing the additional parting lines on the vehicle body and improving the aesthetics. Further, no turn signal lamps need to be disposed at a rearview mirror, which avoids excessive parting lines on the rearview mirror, and reduces the wind noise generated at the rearview mirror.

As illustrated in FIG. 6, according to some embodiments of the present disclosure, the door trim panel 210 has a recess 220 recessed towards an inner side of the vehicle. A part of the mounting cover plate 10 may protrude beyond the recess 220, or the entire mounting cover plate 10 may be arranged to protrude beyond the recess 220. Such an arrangement can enhance a visual impact on the user and allow the mounting cover plate 10 to be flush with a side fender located at a front part of the vehicle body, enhancing the hiding effect for the turn signal lamp component 20 and improving the product grade.

As illustrated in FIG. 6, in some examples, the mounting cover plate 10 includes the first side plate 111 and the second side plate 112. The first side plate 111 is spaced apart from a bottom wall of the recess 220, which can form a mounting space for mounting the turn signal lamp component 20 or a side turn LOGO lamp component. In this way, the functions of the mounting cover plate 10 can be increased, which can improve space utilization of the mounting cover plate 10 and be conducive to enhancing an interactive experience between the vehicle and the user, improving the product grade. The second side plate 112 is located at a side (the rear side as illustrated in FIG. 6) of the first side plate 111 and is connected to the bottom wall of the recess 220, in such a manner that the light emitted by the turn signal lamp component 20 can successfully illuminate the rear side of the vehicle body, which can facilitate the observation by people outside the vehicle and allow the door body 200 to have a streamlined shape, improving the aesthetics of the vehicle.

According to an embodiment of the present disclosure, the vehicle includes the side turn signal lamp mounting assembly 100. By adopting the side turn signal lamp mounting assembly 100 described above, the turn signal lamp component 20 can be prevented from being exposed on the surface of the vehicle body. In addition, the parting lines of the vehicle body can be enabled to coincide as much as possible with the styling feature lines, reducing the additional parting lines on the vehicle body and improving the aesthetics. Further, no turn signal lamps need to be disposed at the rearview mirror, which avoids excessive parting lines on the rearview mirror, and reduces the wind noise generated at the rearview mirror.

Other components and operations of the vehicle according to the embodiments of the present disclosure are known to those of ordinary skill in the art, and thus the description thereof in detail will be omitted here. In the description of the present disclosure, "first feature" and "second feature" may include one or more of these features. The up-down direction, the left-right direction, and the front-rear direction are based on the up-down direction, the left-right direction, and the front-rear direction illustrated in the figures.

In the description of the present disclosure, unless expressly stipulated and defined otherwise, the first feature "on" or "under" the second feature may mean that the first feature is in direct contact with the second feature, or the first and second features are in indirect contact through another feature between them. Moreover, the first feature being "above" the second feature may mean that the first feature is directly above or obliquely above the second feature, or simply mean that the first feature is at a higher level than the second feature.

Reference throughout this specification to "an embodiment", "some embodiments", "an illustrative embodiment", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A side turn signal lamp mounting assembly, comprising:
a mounting cover plate having a first light-transmitting region; and
a turn signal lamp component disposed at a side of the mounting cover plate and comprising a shell and a light-emitting member, wherein the shell has a second light-transmitting region arranged to face the first light-transmitting region, and wherein the light-emitting member is disposed in the shell, light emitted by the light-emitting member being adapted to be emitted through the first light-transmitting region and the second light-transmitting region.

2. The side turn signal lamp mounting assembly according to claim 1, wherein at least two light-emitting members are provided, light-emitting directions of the at least two light-emitting members being different.

3. The side turn signal lamp mounting assembly according to claim 2, wherein the turn signal lamp component further comprises a light guide member disposed in the shell, the at least two light-emitting members being located on two adjacent sides of the light guide member.

4. The side turn signal lamp mounting assembly according to claim 2, wherein:
a plurality of light-emitting members are provided; and
the turn signal lamp component further comprises:
a first circuit board provided with one or more of the plurality of light-emitting members; and
a second circuit board disposed at a side of the first circuit board and extending in a different direction from the first circuit board, the second circuit board being provided with the remaining light-emitting members of the plurality of light-emitting members.

5. The side turn signal lamp mounting assembly according to any one of claims 1 to 4, wherein the mounting cover plate comprises:
an outer cover housing, the outer cover housing being a light-transmitting member; and
an inner cover housing disposed at a side of the outer cover housing and having an avoidance opening, wherein a part of the outer cover housing corresponding to the avoidance opening in position is formed as the first light-transmitting region.

6. The side turn signal lamp mounting assembly according to claim 5, wherein the outer cover housing has a light transmittance ranging from 35% to 85%.

7. The side turn signal lamp mounting assembly according to claim 5, wherein:
the mounting cover plate is adapted to be mounted at an exterior trim panel of a side portion of a vehicle body; and
the outer cover housing comprises a first side plate and a second side plate, wherein:
the first side plate protrudes beyond the exterior trim panel and extends in a length direction of the vehicle body;
the second side plate is located at a side of the first side plate close to an interior of the vehicle body and connected to an end of the first side plate close to a tail of the vehicle body, the second side plate extending obliquely towards the tail of the vehicle body in a direction away from the first side plate.

8. The side turn signal lamp mounting assembly according to claim 5, wherein the outer cover housing and the inner cover housing are integrally injection-molded.

9. The side turn signal lamp mounting assembly according to claim 5, wherein the inner cover housing is integrally injection-molded from acrylic and engineering plastic.

10. The side turn signal lamp mounting assembly according to any one of claims 1 to 9, wherein the shell comprises:
a bottom housing; and
a cover cap disposed to cover a side of the bottom housing close to the mounting cover plate,
wherein the cover cap cooperates with the bottom housing to form a receiving space for receiving the light-emitting member, a part of the cover cap facing the first light-transmitting region being formed as the second light-transmitting region.

11. The side turn signal lamp mounting assembly according to claim 10, wherein the cover cap has a light transmittance ranging from 20% to 80%.

12. The side turn signal lamp mounting assembly according to any one of claims 1 to 11, further comprising a seal disposed between the turn signal lamp component and the mounting cover plate, wherein the turn signal lamp component and the mounting cover plate are fixedly connected to each other by a fastener, and wherein the seal is configured to implement a sealing connection between the turn signal lamp component and the mounting cover plate.

13. A door body of a vehicle, comprising:
a door trim panel; and
the side turn signal lamp mounting assembly according to any one of claims 1 to 12, the mounting cover plate being disposed at the door trim panel.

14. The door body of the vehicle according to claim 13, wherein:
the door trim panel has a recess recessed towards an inner side of the vehicle; and
the mounting cover plate at least partially protrudes beyond the recess.

15. A vehicle, comprising the side turn signal lamp mounting assembly according to any one of claims 1 to 12.
